# EUROPEAN PATENT SPECIFICATION

(11) **EP 4 379 340 B1**
(45) Date of publication and mention of the grant of the patent: **27.11.2024**
(21) Application number: 23189608.5
(22) Date of filing: 03.08.2023
(51) Int. Cl.: G01M 3/04, G01M 3/38

(54) **LEAK DETECTION SENSOR MODULE**
LECKDETEKTIONSSENSORMODUL
MODULE DE CAPTEUR DE DÉTECTION DE FUITE

(30) Priority: 01.12.2022 KR 20220165573
(43) Date of publication of application: 05.06.2024
(73) Proprietor: Autosensorkorea Co., Ltd., Suwon-si, Gyeonggi-do 16521 (KR); Heo, Ji Hyeon, Suwon-si, Gyeonggi-do 16420 (KR); Choi, Sang Hyun, Suwon-si, Gyeonggi-do 16707 (KR)
(72) Inventor: HEO, Ji Hyeon, 16420 Gyeonggi-do (KR); CHOI, Sang Hyun, 16707 Gyeonggi-do (KR)
(74) Representative: Sander, Rolf

(56) References cited:
- EP-A2- 0 316 551
- JP-A- 2020 056 660
- KR-B1- 101 938 098

## Description

### CROSS REFERENCE TO RELATED APPLICATION

The present application claims priority to Korean Patent Application No. 10-2022-0165573, filed December 01, 2022, the entire contents of which are incorporated herein for all purposes by this reference.

### BACKGROUND OF THE INVENTION

### Field of the Invention

The present disclosure relates to a leak detection sensor module. More particularly, the present disclosure relates to a leak detection sensor module configured such that an entire cartridge in which a reaction material is mounted is capable of being easily and conveniently replaced or the reaction material is capable of being replaced after leak detection is performed, the reaction material being configured such that the reaction material maintains an opaque state when oil is not absorbed to the reaction material and a state of the reaction material is converted to a transparent state or a translucent state when the reaction material absorbs and reacts with leaked oil so that the leak detection is capable of being performed, thereby enabling recycling a sensor module and maximizing reliability by reducing an oil leak detection error rate.

### Description of the Related Art

Generally, various types of leak sensors for detecting a water leakage and an oil leakage are used in a water leakage situation and an oil leakage situation. As representative leak sensors, a cable-type leak sensor, a band-type leak sensor, and a module-type leak sensor are used. The cable-type leak sensor is a leak detection sensor which detects the exposure of various liquids (water, oil, and so on) and which accurately and rapidly informs of a point where a liquid leakage occurs.

The water leakage and the oil leakage may be checked by detecting a potential difference of an electric current that flows along a conducting wire, the potential difference being generated by a resistance of water or oil that are leaked, and the potential difference can be detected using a detection line. However, such a cable-type leak sensor requires high installation costs, and the consumer's selection of the cable-type leak sensor is limited because a sensor cable has a determined length.

Furthermore, there are problems in that it is difficult to mount a sensor and an additional cost is incurred since a separate bracket should be used for mounting the sensor, and in that a large amount of time is required to repair a leak after detection of the leak and it is difficult to connect the cable-type leak sensor to an external device.

In such a band-type leak detection sensor, when water contacts an electric wire while a current flows through the electric wire, a resistance value of the electric wire is changed, so that whether a water leakage occurs is capable of being detected by checking the resistance value that is changed.

Such a band-type leak detection sensor can detect a water leakage in a large area at low costs and is easily mounted. However, such a band-type leak detection sensor has problems in that the incidence of error due to high humidity and external impact is high, the accurate location of the water leakage cannot be easily checked, and it is difficult to mount the sensor because there is no connectivity in installation.

In addition, there are problems in that the band-type leak sensor has problems in that the price is high compared with performance, installation is difficult and additional expenses are necessary because an additional bracket to be fixed to the bottom is required to be mounted when the band-type leak sensor is mounted, and an alternative connection device in addition to a simple relay contact point method is not present when the band-type leak sensor is connected to an external device.

Meanwhile, in the module-type leak sensor, photo sensors (a light-receiving portion and a light-emitting portion) are positioned inside a plastic casing. Furthermore, a beam of the light-emitting portion is received by the light-receiving portion when liquid is not detected, but the beam does not go to the light-receiving portion due to a change of a refractive index when the liquid is detected by the beam of the light-emitting portion, so that a water leakage is detected on the basis of a received state of light.

The module-type leak sensor can be easily mounted, can detect a water leakage danger portion at low cost, can generate an alarm in itself irrespective of peripheral devices, and does not have an error attributable to humidity. However, the module-type leak sensor has problems in that the module-type leak sensor can check only whether a specific location leaks or not unlike a cable-type leak sensor, and in that it is difficult to connect the module-type leak sensor to peripheral devices.

Furthermore, the module-type leak sensor has problems in that a lot of time is required in installing the module-type leak sensor because an additional sensor fixing scheme is required to be planned and detection becomes difficult if a water leakage location is changed because only a specific portion of a water leakage danger area can be detected, and in that a distance between the bottom surface and the sensor is difficult to be adjusted.

In order to solve the problems of the conventional module-type leak sensor, the present applicant has registered Korean Patent No. 10-1965866 "LEAK SENSOR USING LIGHT SOURCE".

Although the Korean Patent "LEAK SENSOR USING LIGHT SOURCE" described above provides a convenience of detecting a leakage for all fluids, but there is a problem that detection cannot be performed limited to a specific fluid.

In addition, in the Korean Patent described above, when liquid having a determined viscosity is in contact with a transmission member that transmits light, a leaked liquid is attached on a surface of the transmission member. Therefore, even if a surface of a lens is contaminated and the surface of the lens is wiped clean to remove the liquid, there is a problem that an error occurs since the leaked liquid remains on the surface and affects the refractive index of the light when the leak sensor is reused.

### Document of Related Art

(Patent Document 1) Korean Patent No. 10-1460020.
(Patent Document 2) Korean Patent No. 10-1965866.
(Patent Document 3) Korean Patent No. 10-2029359.

### SUMMARY OF THE INVENTION

Accordingly, the present disclosure has been made keeping in mind the above problems occurring in the related art, and an objective of the present disclosure is to provide a leak detection sensor module configured such that an entire cartridge in which a reaction material is mounted is capable of being easily and conveniently replaced or the reaction material is capable of being replaced after leak detection is performed, the reaction material being configured such that the reaction material maintains an opaque state when oil is not absorbed to the reaction material and a state of the reaction material is converted to a transparent state or a translucent state when the reaction material absorbs and reacts with leaked oil so that the leak detection is capable of being performed, thereby enabling recycling a sensor module and maximizing reliability by reducing an oil leak detection error rate.

In order to achieve the above objective, according to the present disclosure, there is provided a leak detection sensor module including: a body having an upper portion opened, the body having an inner space in which a substrate, a transmission member, and a fixing body are mounted, the body having a bottom surface provided with a mounting hole in which a cartridge is mounted, and the body having a side surface provided with a connection hole; a cover closing the upper portion of the body that is opened; the substrate to which an emitting portion generating light by a power supply and a receiving portion receiving a refracted light are connected and in which a microcomputer analyzing a detected signal is mounted; the cartridge which is detachably mounted on a lower surface of the body and which is configured such that the cartridge maintains an opaque state when oil is not absorbed to the cartridge and which is configured such that the cartridge is converted to a transparent state or a translucent state when the cartridge absorbs leaked oil and reacts with an absorbed oil, thereby realizing leak detection; the transmission member fixed and mounted inside the body, the transmission member having a flat plate shape, and the transmission member transmitting an emitted light; and the fixing body mounted inside the body, the fixing body fixing the substrate and the transmission member, and the fixing body fixing the emitting portion emitting light and the receiving portion receiving the emitted light.

According to the present disclosure, the leak detection sensor module may further include a checking means, the checking means being configured such that a see-through window is mounted in a seating groove of an outer side surface of the cover, a transmission hole through which LED light is transmitted is formed in the cover where the see-through window is mounted, a plurality of LEDs is mounted on the substrate, and the LEDs are turned on when a leak is detected.

According to the present disclosure, the leak detection sensor module may further include a filling material, the filling material being mounted in a space of the body such that shock is absorbed and the substrate is prevented from being moved.

According to the present disclosure, the cartridge may include: a housing having an inner side thereof provided with a mounting space portion in which a reaction material is mounted, the housing having a plurality of fluid moving grooves in which the leaked oil is capable of being moved toward the reaction material and which is formed around an opening portion of a lower portion of the housing by a predetermined distance, and the housing having a locking step formed inside the opening portion such that a separation prevention plate is prevented from being separated; the reaction material inserted into the fluid moving grooves , the reaction material being an opaque material, and the reaction material being configured to be converted to a transparent state or a translucent state when the reaction material absorbs oil and reacts with the absorbed oil; and the separation prevention plate mounted by being fitted into the locking step positioned inside the opening portion of the housing, the separation prevention plate preventing the reaction material from being separated.

According to the present disclosure, a plurality of steps may be formed on the bottom surface of the body by a predetermined distance such that a plurality of partition wall portions separating and partitioning the cartridge is formed, and the mounting hole may be formed between the partition wall portions.

According to the present disclosure, the entire cartridge in which the reaction material is mounted is capable of being easily and conveniently replaced or the reaction material is capable of being replaced after the leak detection is performed, and the reaction material is configured such that the reaction material maintains the opaque state when oil is not absorbed to the reaction material and the state of the reaction material is converted to the transparent state or the translucent state when the reaction material absorbs and reacts with leaked oil so that the leak detection is capable of being performed, so that there is an effect that the sensor module is capable of being recycled and reliability may be maximized since oil leak detection error rate is reduced.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating a structure of a leak detection sensor module in which the technology of the present disclosure is applied;
FIG. 2 is an exploded perspective view illustrating the structure of the leak detection sensor module in which the technology of the present disclosure is applied;
FIG. 3 is a cross-sectional view illustrating the structure of the leak detection sensor module in which the technology of the present disclosure is applied;
FIG. 4 is an exploded perspective view illustrating a structure of a cartridge that is the gist of the present disclosure;

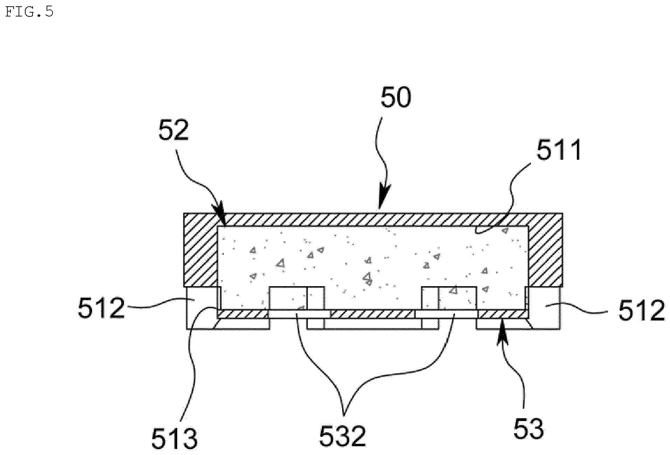

FIG. 5 is a cross-sectional view illustrating the structure of the cartridge that is the gist of the present disclosure; and
FIG. 6 is a use state view illustrating an operation of the cartridge that is the gist of the present disclosure.

### DETAILED DESCRIPTION OF THE INVENTION

Hereinafter, an exemplary embodiment of the present disclosure will be described with reference to the accompanying drawings.

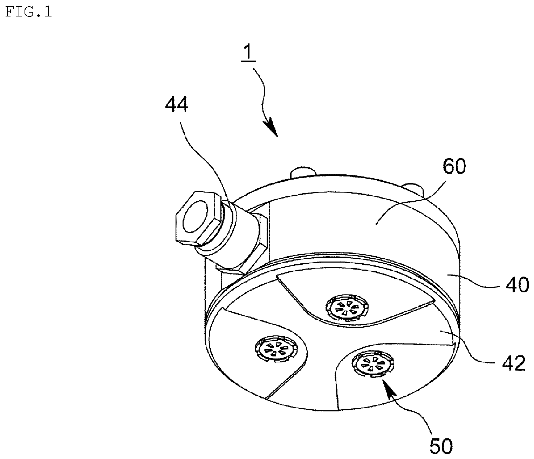

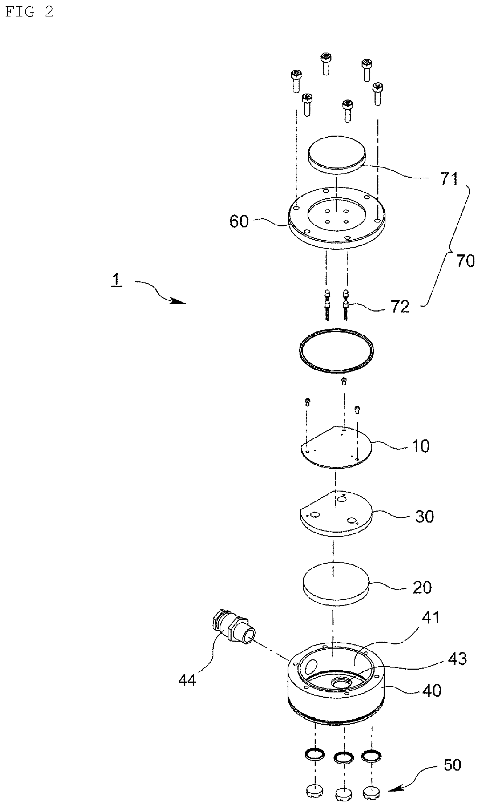

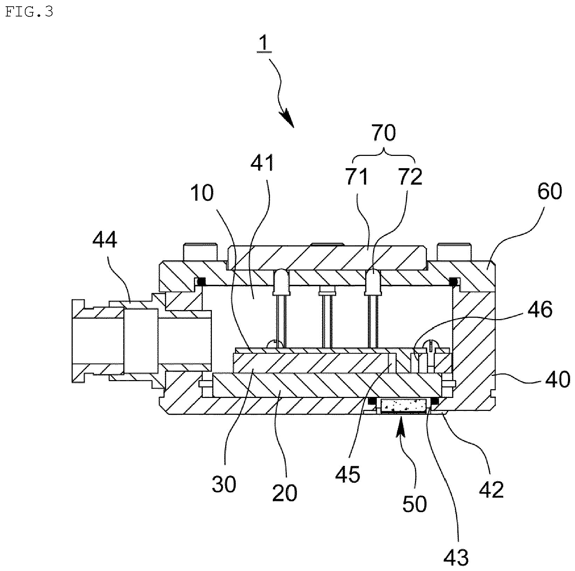

The attached drawing FIG. 1 is a perspective view illustrating a structure of a leak detection sensor module in which the technology of the present disclosure is applied, FIG. 2 is an exploded perspective view illustrating the structure of the leak detection sensor module in which the technology of the present disclosure is applied, and FIG. 3 is a cross-sectional view illustrating the structure of the leak detection sensor module in which the technology of the present disclosure is applied. According to the present disclosure, a leak detection sensor module 1 includes a body 40 in which a substrate 10, a transmission member 20, and a fixing body 30 fixing the substrate 10 and the transmission member 20 are mounted therein, a cover 60 coupled to the body 40, and a cartridge 50 mounted at a bottom surface of the body 40.

A structure of the body 40 is configured such that an upper portion of the body 40 is opened and the transmission member 20, the fixing body 30, and the substrate 10 are mounted sequentially in an inner space 41. Furthermore, steps are formed on the bottom surface of the body 40 by a predetermined distance so that a plurality of partition wall portions 42 is formed, a plurality of mounting holes 43 in which the cartridges 50 are respectively mounted is formed between the partition wall portions 42 by a predetermined distance, and a side surface of the body 40 is provided with a connection hole 44.

The cover 60 closing the upper portion of the body 40 that is opened is mounted by being screw-coupled with a bolt. In an inner side of the body 40, a light-emitting means mounting groove 45 in which a light-emitting means generating light by a power supply is mounted is formed, and a light-receiving means mounting groove 46 in which a light-receiving means receiving a refracted light (including a reflected light) is mounted is formed. Furthermore, a detected signal is transmitted to a microcomputer of the substrate 10.

The transmission member 20 is mounted at a lower end of the substrate 10, the substrate 10 being fixed and mounted inside the body 40. Furthermore, the transmission member 20 has a flat plate shape, is formed of any one of a glass material, a synthetic resin material, and an insulator, and transmits an emitted light.

Meanwhile, in the inner side of the body 40, the fixing body 30 fixing the body 10 and the transmission member 20 is mounted, and the light-emitting means emitting light and the light-receiving means receiving the emitted light are included. Furthermore, the cartridge 50 is detachably coupled to the bottom surface of the body 40 by being fitted into the mounting hole 43, is configured such that the cartridge 50 maintains an opaque state when oil is not absorbed to the cartridge 50, and is configured such that a state of the cartridge 50 is converted to a transparent state or a translucent state when the cartridge 50 absorbs leaked oil and reacts with oil absorbed to the cartridge, thereby realizing leak detection.

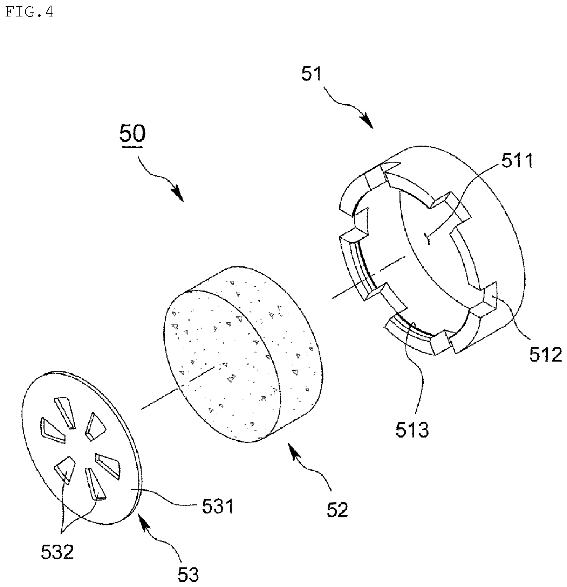

As illustrated in FIG. 4, the cartridge 50 includes a housing 51 capable of being mounted on or demounted from the leak detection sensor module, a reaction material 52 inserted and mounted inside the housing 51, and a separation prevention plate 53 preventing the reaction material 52 mounted in the housing 10 from being separated.

In the housing 51, a mounting space portion 511 in which the reaction material 52 is mounted is formed inside the housing 51, and a plurality of fluid moving grooves 512 in which leaked oil is capable of being moved toward the reaction material 52 is formed around an opening portion of a lower portion of the housing 51 by a predetermined distance.

Meanwhile, locking steps 513 are formed inside opposite sides of the housing 51 with respect to the fluid moving grooves 512, thereby preventing the separation prevention plate 53 from separating.

The reaction material 52 is molded by pressing powder, and does not react with any liquid except oil. Furthermore, the reaction material 52 is in an opaque state when oil is not absorbed to the reaction material 52, and is changed into a transparent state when the oil is absorbed to the reaction material 52 and at the same time the reaction material 52 reacts with the absorbed oil. Therefore, the reaction material 52 is used for the leak detection since the amount of light emitted from the light-emitting means and received is changed by the reaction material 52.

As a molding method, raw material powder for manufacturing the reaction material 52 is inserted into a container, and the raw material powder is pressed at a high-pressure and is molded. At this time, when the raw material powder is heated to a predetermined temperature, the molding of the raw material powder is easily performed.

As the reaction material 52, a powder-type aerosol is used, and the reaction material 52 is molded by pressing powder. The molding is performed so that the reaction material 52 has a shape, thereby allowing the reaction material 52 to be easily transported and stored.

The separation prevention plate 53 has a structure in which a plurality of through-holes 532 is formed in a plate 531 by a predetermined distance so that leaked oil is capable of being easily absorbed to the reaction material 52, in which the plate 31 has a flat plate shape and is formed of a metal material.

Among metals, it is preferable that a metal that does not rust is used for the metal material which is used in the manufacturing of the separation prevention plate 53. Furthermore, since the metal used in the manufacturing of the separation prevention plate 53 does not react with oil, stability of the separation prevention plate 53 may be realized and occurrence of air may be prevented when the separation prevention plate 53 is mounted on a sensor.

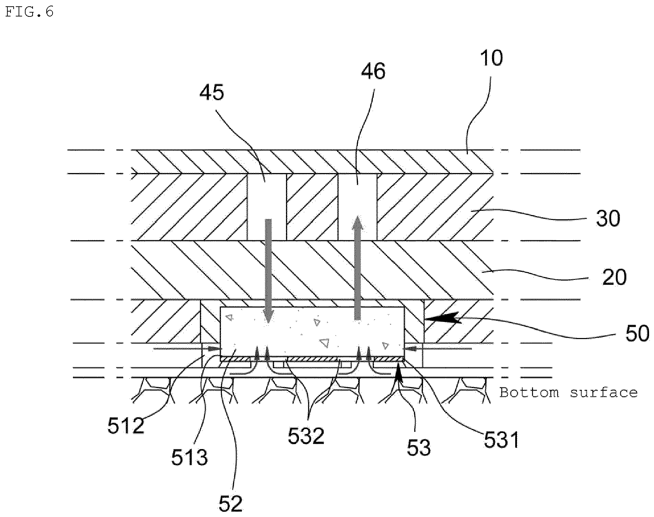

As illustrated in FIG. 6, when the leak detection sensor module 1 of the present disclosure is used, the leak detection sensor module 1 is mounted on a ground or a floor where oil leakage occurs.

When oil leakage occurs at a point where the leak detection sensor module 1 of the present disclosure is positioned, oil flows between the body 40 and the ground or a surface of a product. Furthermore, when the oil is introduced inside the partition wall portion 42 of the bottom surface of the lower portion of the body 40, the oil is blocked by the partition wall portion 42 and cannot be moved to other adjacent partition wall portions 42. At this time, the oil is absorbed to the reaction material 52 of the cartridge 50.

Meanwhile, as illustrated in FIG. 6, the leaked oil is absorbed to the reaction material 52 through a lower portion and a side surface of the housing 51. That is, the leaked oil is absorbed to the reaction material 52 through the through-holes 532 of the separation prevention plate 53 mounted at the bottom surface of the housing 51, and is absorbed to the reaction material 52 through the fluid moving grooves 512 formed at the side surface of the housing 51.

When oil is not absorbed to the reaction material 52, the reaction material 52 is in the opaque state, and light transmitted from the light-emitting means which is mounted at the sensor and which is configured to emit light is blocked. Since the light is blocked, the light-receiving means cannot detect the light that is blocked, and the light-receiving means cannot measure the amount of light, so that it is determined that no oil leakage has occurred.

However, in a state in which leaked oil is absorbed to the reaction material 52 and the reaction material 52 react with the leaked oil, leak detection is capable of being performed. That is, in a state in which the reaction material 52 is changed to the transparent state or the translucent state, light emitted from the light-emitting means is refracted by oil and the amount of light is checked, thereby performing the leak detection.

As illustrated in FIG. 6, in a leakage detection method, before oil is absorbed to the reaction material 52, all light emitted from the light-emitting means is absorbed by the reaction material 52, so that a reflected light cannot be detected by the light-receiving means. However, when oil is leaked and the reaction material 52 absorbs and reacts with the oil and the state of the reaction material is converted to the transparent state or the translucent state, an emitted light penetrates the reaction material 52 and is reflected and refracted by the oil that flows on the bottom surface, and the light-receiving means can detect the amount of light, so that oil leakage detection is performed.

Meanwhile, when the state of the reaction material 52 is converted to the transparent state or the translucent state and a leak is detected, the leak (oil leakage) is checked with a detected signal by using a leak checking means 70. The leak checking means 70 includes a LED 72 connected to the substrate 10, and includes a see-through window 71 mounted on the cover 60.

When the leak occurs, the LED 72 is turned on and whether the leak occurs can be visually checked. As a lighting method of the LED 72, one LED may be connected to one cartridge and the LED, or all LEDs are turned on when a leak is detected at one cartridge. Furthermore, the LED 72 is protected by the see-through window 71, and the substrate 10 is connected to an external control device through the connection hole 44.

According to the present disclosure, convenience in that the reaction material 52 can be easily and conveniently replaced and mounted or the entire cartridge 50 can be replaced.

Meanwhile, in an embodiment of the present disclosure, it is described that the reaction material 52 is in the opaque state and the state of the reaction material 52 is converted to the transparent state when the reaction material 52 absorbs and reacts with oil. However, a configuration of the reaction material 52 may be changed, and the reaction material 52 may be used such that the reaction material 52 is in the transparent state when oil is not absorbed to the reaction material 52 and the state of the reaction material 52 is changed to the opaque state when the reaction material 52 absorbs and reacts with the oil.

## Claims

1. A leak detection sensor module comprising:
a body having an upper portion opened, the body having an inner space in which a substrate, a transmission member, and a fixing body are mounted, the body having a bottom surface provided with a mounting hole in which a cartridge is mounted, and the body having a side surface provided with a connection hole;
a cover closing the upper portion of the body that is opened;
the substrate to which an emitting portion generating light by a power supply and a receiving portion receiving a refracted light are connected and in which a microcomputer analyzing a detected signal is mounted;
the cartridge which is detachably mounted on a lower surface of the body and which is configured such that the cartridge maintains an opaque state when oil is not absorbed to the cartridge and which is configured such that the cartridge is converted to a transparent state or a translucent state when the cartridge absorbs leaked oil and reacts with an absorbed oil, thereby realizing leak detection;
the transmission member fixed and mounted inside the body, the transmission member having a flat plate shape, and the transmission member transmitting an emitted light; and
the fixing body mounted inside the body, the fixing body fixing the substrate and the transmission member, and the fixing body fixing the emitting portion emitting light and the receiving portion receiving the emitted light.

2. The leak detection sensor module of claim 1, further comprising a checking means, the checking means being configured such that a see-through window is mounted in a seating groove of an outer side surface of the cover, a transmission hole through which LED light is transmitted is formed in the cover where the see-through window is mounted, a plurality of LEDs is mounted on the substrate, and the LEDs are turned on when a leak is detected.

3. The leak detection sensor module of claim 1, further comprising a filling material, the filling material being mounted in a space of the body such that shock is absorbed and the substrate is prevented from being moved.

4. The leak detection sensor module of claim 3, wherein the filling material is any one of a silicone resin solution that is injected and cured, a foam having a bead shape, and a short fiber.

5. The leak detection sensor module of claim 1, wherein the cartridge comprises:
a housing having an inner side thereof provided with a mounting space portion in which a reaction material is mounted, the housing having a plurality of fluid moving grooves in which the leaked oil is capable of being moved toward the reaction material and which is formed around an opening portion of a lower portion of the housing by a predetermined distance, and the housing having a locking step formed inside the opening portion such that a separation prevention plate is prevented from being separated;
the reaction material inserted into the fluid moving grooves, the reaction material being an opaque material, and the reaction material being configured to be converted to a transparent state or a translucent state when the reaction material absorbs oil and reacts with the absorbed oil; and
the separation prevention plate mounted by being fitted into the locking step positioned inside the opening portion of the housing, the separation prevention plate preventing the reaction material from being separated.

6. The leak detection sensor module of claim 1, wherein a plurality of steps is formed on the bottom surface of the body by a predetermined distance such that a plurality of partition wall portions separating and partitioning the cartridge is formed, and the mounting hole is formed between the partition wall portions.

## Patentansprüche

1. Leckdetektionssensormodul, umfassend:
einen Körper mit einem geöffneten oberen Abschnitt, wobei der Körper einen Innenraum aufweist, in dem ein Substrat, ein Übertragungselement und ein Befestigungskörper montiert sind, wobei der Körper eine Bodenfläche aufweist, die mit einem Montageloch bereitgestellt ist, in dem eine Kartusche montiert ist, und wobei der Körper eine Seitenfläche aufweist, die mit einem Verbindungsloch bereitgestellt ist;
eine Abdeckung, die den oberen Abschnitt des Körpers, der geöffnet ist, verschließt;
das Substrat, an das ein emittierender Abschnitt, der durch eine Stromversorgung Licht erzeugt, und ein empfangender Abschnitt, der gebrochenes Licht empfängt, angeschlossen sind und in dem ein Mikrocomputer montiert ist, der ein detektiertes Signal analysiert;
die Kartusche, die abnehmbar an einer unteren Fläche des Körpers montiert ist und die derart konfiguriert ist, dass die Kartusche einen undurchsichtigen Zustand beibehält, wenn kein Öl in die Kartusche aufgenommen wird, und die derart konfiguriert ist, dass die Kartusche in einen durchsichtigen Zustand oder einen durchscheinenden Zustand übergeht, wenn die Kartusche ausgetretenes Öl aufnimmt und mit dem aufgenommenen Öl reagiert, wodurch eine Leckdetektion realisiert wird;
das Übertragungselement, das im Inneren des Körpers befestigt und montiert ist, wobei das Übertragungselement die Form einer flachen Platte aufweist und das Übertragungselement ein emittiertes Licht überträgt; und
den Befestigungskörper, der im Inneren des Körpers montiert ist, wobei der Befestigungskörper das Substrat und das Übertragungselement befestigt und der Befestigungskörper den emittierenden Abschnitt, der Licht emittiert, und den empfangenden Abschnitt, der das emittierte Licht empfängt, befestigt.

2. Leckdetektionssensormodul nach Anspruch 1, ferner umfassend eine Prüfeinrichtung, wobei die Prüfeinrichtung derart konfiguriert ist, dass ein durchsichtiges Fenster in einer Aufnahmenut einer äußeren Seitenfläche der Abdeckung montiert ist, wobei ein Übertragungsloch, durch das LED-Licht übertragen wird, dort in der Abdeckung ausgebildet ist, wo das durchsichtige Fenster montiert ist, wobei eine Vielzahl von LEDs auf dem Substrat montiert ist und wobei die LEDs eingeschaltet werden, wenn ein Leck detektiert wird.

3. Leckdetektionssensormodul nach Anspruch 1, ferner umfassend ein Füllmaterial, wobei das Füllmaterial derart in einem Raum des Körpers montiert ist, dass Stöße aufgenommen werden und eine Bewegung des Substrats verhindert wird.

4. Leckdetektionssensormodul nach Anspruch 3, wobei das Füllmaterial ein beliebiges von einer Silikonharzlösung, die eingespritzt und ausgehärtet wird, einem Schaum, der eine Perlenform aufweist, und einer Kurzfaser ist.

5. Leckdetektionssensormodul nach Anspruch 1, wobei die Kartusche Folgendes umfasst:
ein Gehäuse, das an einer Innenseite davon einen daran bereitgestellten Montageraumabschnitt aufweist, in dem ein Reaktionsmaterial montiert ist, wobei das Gehäuse eine Vielzahl von Flüssigkeitsbewegungsnuten aufweist, in denen das ausgetretene Öl in Richtung des Reaktionsmaterials bewegt werden kann, und die in einem vorgegebenen Abstand um einen Öffnungsabschnitt eines unteren Abschnitts des Gehäuses herum ausgebildet sind, und wobei das Gehäuse eine Verriegelungsstufe aufweist, die derart im Öffnungsabschnitt ausgebildet ist, dass verhindert wird, dass eine Trennungsverhinderungsplatte getrennt wird;
das Reaktionsmaterial, das in die Flüssigkeitsbewegungsnuten eingesetzt ist, wobei das Reaktionsmaterial ein undurchsichtiges Material ist und das Reaktionsmaterial dazu konfiguriert ist, in einen transparenten Zustand oder einen durchscheinenden Zustand überzugehen, wenn das Reaktionsmaterial Öl aufnimmt und mit dem aufgenommenen Öl reagiert; und
die Trennungsverhinderungsplatte, die montiert ist, indem sie in die Verriegelungsstufe eingepasst wird, die sich im Öffnungsabschnitt des Gehäuses befindet, wobei die Trennungsverhinderungsplatte verhindert, dass das Reaktionsmaterial getrennt wird.

6. Leckdetektionssensormodul nach Anspruch 1, wobei auf der Bodenfläche des Körpers in einem vorgegebenen Abstand eine Vielzahl von Stufen derart ausgebildet sind, dass eine Vielzahl von Unterteilungswandabschnitten ausgebildet werden, die die Kartusche trennen und unterteilen, und das Montageloch zwischen den Unterteilungswandabschnitten ausgebildet ist.

## Revendications

1. Module de capteur de détection de fuite comprenant :
un corps comportant une partie supérieure ouverte, le corps comportant un espace interne dans lequel sont montés un substrat, un élément de transmission et un corps de fixation, le corps comportant une surface inférieure pourvue d'un trou de montage dans lequel est montée une cartouche, et le corps comportant une surface latérale pourvue d'un trou de raccordement ;
un couvercle fermant la partie supérieure du corps qui est ouverte;
le substrat auquel sont raccordées une partie émettrice générant de la lumière par une alimentation électrique et une partie réceptrice recevant une lumière réfractée et dans lequel est monté un micro-ordinateur analysant un signal détecté ;
la cartouche qui est montée de manière amovible sur une surface inférieure du corps et qui est conçue de sorte que la cartouche conserve un état opaque lorsque l'huile n'est pas absorbée par la cartouche et qui est conçue de sorte que la cartouche soit convertie en un état transparent ou un état translucide lorsque la cartouche absorbe l'huile qui fuit et réagit avec une huile absorbée, réalisant ainsi une détection de fuite ;
l'élément de transmission fixé et monté à l'intérieur du corps, l'élément de transmission comportant une forme de plaque plate, et l'élément de transmission transmettant une lumière émise ; et
le corps de fixation monté à l'intérieur du corps, le corps de fixation fixant le substrat et l'élément de transmission, et le corps de fixation fixant la partie émettrice émettant de la lumière et la partie réceptrice recevant la lumière émise.

2. Module de capteur de détection de fuite selon la revendication 1, comprenant en outre un moyen de contrôle, le moyen de contrôle étant conçu de sorte qu'une fenêtre transparente soit montée dans une rainure de siège d'une surface latérale externe du couvercle, un trou de transmission à travers lequel la lumière DEL est transmise est formé dans le couvercle à l'endroit où est montée la fenêtre transparente, une pluralité de DEL est montée sur le substrat, et les DEL sont allumées lorsqu'une fuite est détectée.

3. Module de capteur de détection de fuite selon la revendication 1, comprenant en outre un matériau de remplissage, le matériau de remplissage étant monté dans un espace du corps de sorte que les chocs soient absorbés et que le déplacement du substrat soit empêché.

4. Module de capteur de détection de fuite selon la revendication 3, ledit matériau de remplissage étant un quelconque élément parmi une solution de résine de silicone injectée et durcie, une mousse comportant une forme de bille et une fibre courte.

5. Module de capteur de détection de fuite selon la revendication 1, ladite cartouche comprenant :
un boîtier dont un côté interne est pourvu d'une partie d'espace de montage dans laquelle un matériau réactionnel est monté, le boîtier comportant une pluralité de rainures de déplacement de fluide dans lesquelles l'huile qui fuit peut se déplacer vers le matériau réactionnel et qui sont formées autour d'une partie d'ouverture d'une partie inférieure du boîtier sur une distance prédéfinie, et le boîtier comportant un épaulement de verrouillage formé à l'intérieur de la partie d'ouverture de façon à empêcher la séparation d'une plaque de prévention de séparation ;
le matériau réactionnel inséré dans les rainures de déplacement de fluide, le matériau réactionnel étant un matériau opaque, et le matériau réactionnel étant conçu pour être converti en un état transparent ou un état translucide lorsque le matériau réactionnel absorbe l'huile et réagit avec l'huile absorbée ; et
ladite plaque de prévention de séparation montée en étant ajustée dans l'épaulement de verrouillage positionnée à l'intérieur de la partie d'ouverture du boîtier, la plaque de prévention de séparation empêchant la séparation du matériau réactionnel.

6. Module de capteur de détection de fuite selon la revendication 1, une pluralité d'épaulements étant formés sur la surface inférieure du corps sur une distance prédéfinie de sorte qu'une pluralité de parties de paroi de séparation séparant et cloisonnant la cartouche soient formées, et ledit trou de montage étant formé entre les parties de paroi de séparation.
